# EUROPÄISCHE PATENTSCHRIFT

(11) **EP 3 408 533 B1**
(45) Veröffentlichungstag und Bekanntmachung des Hinweises auf die Patenterteilung: **17.03.2021**
(21) Anmeldenummer: 17702578.0
(22) Anmeldetag: 26.01.2017
(51) Int. Cl.: F03D 1/06

(54) **ROTORBLATT EINER WINDENERGIEANLAGE UND WINDENERGIEANLAGE**
ROTOR BLADE OF A WIND TURBINE AND A WIND TURBINE
PALE DE ROTOR D'UNE ÉOLIENNE ET ÉOLIENNE

(30) Priorität: 26.01.2016 DE 102016201114
(43) Veröffentlichungstag der Anmeldung: 05.12.2018
(73) Patentinhaber: Wobben Properties GmbH, 26607 Aurich (DE)
(72) Erfinder: HOFFMANN, Alexander, 26721 Emden (DE)
(74) Vertreter: Eisenführ Speiser
(86) Internationale Anmeldenummer: PCT/EP2017/051673
(87) Internationale Veröffentlichungsnummer: WO 2017/129691

(56) Entgegenhaltungen:
- WO-A1-2013/076009
- WO-A1-2013/153009
- WO-A1-2014/025252
- DE-A1-102013 210 901

## Beschreibung

Die Erfindung betrifft ein Rotorblatt einer Windenergieanlage sowie eine Windenergieanlage.

Rotorblätter für einen Rotor einer Windenergieanlage sind allgemein bekannt. Solche Rotorblätter weisen ein Profil (Querschnittsprofil) auf, welches den besonderen aerodynamischen Anforderungen Rechnung trägt.

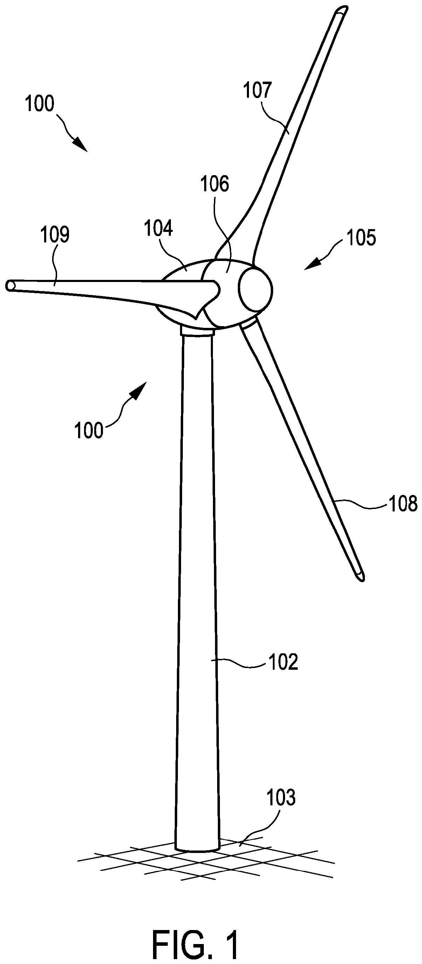

Eine Windenergieanlage weist beispielsweise einen aerodynamischen Rotor mit mehreren Rotorblättern auf und ist exemplarisch in der Fig.1 gezeigt. Die aerodynamischen Eigenschaften solcher Rotorblätter beeinflussen die Leistungsfähigkeit der Rotorblätter und damit der Windenergieanlage. Um die Leistungsfähigkeit eines Rotorblatts zu erhöhen werden dessen Profile optimiert. Um beispielsweise in Regionen mit leichtem Wind, nämlich insbesondere an Binnenstandorten, eine möglichst stetige Stromproduktion sicherzustellen, weisen die aerodynamischen Rotoren einen Rotordurchmesser auf, der mehr als 80 Meter betragen kann. Bei solchen großen Windenergieanlagen und somit auch sehr großen Rotorblättern, führt dies zu einem hohen Rotorblattgewicht. Die großen und schweren Rotorblätter erzeugen hohe Lasten, welche auf die Windenergieanlage im Betrieb einwirken. Zudem ist die Herstellung sowie der Transport zu den jeweiligen Aufbaustandorten kompliziert und schwierig. Eine Realisierung eines zweigeteilten Rotorblattes, das günstiger für den Transport solcher großen Rotorblätter wäre, ist aufgrund der auftretenden Lasten und der zusätzlich durch die Trennstelle entstehenden Stabilitätsminderung aber nur bedingt möglich.

Die Gestaltung eines Profils eines Rotorblatts, insbesondere im Nabenbereich ist gewissen Anforderungen unterworfen, die anders gelagert sind als etwa im Spitzenbereich des Rotorblatts. Eine Übersicht liefert beispielsweise die Doktorarbeit von Barbara Souza-Heinzelmann in "Strömungsbeeinflussung bei Rotorblättern von Windenergieanlagen mit Schwerpunkt auf Grenzschichtabsaugung" (Berlin 23. Juni 2011). Dort sind unterschiedliche Formen der Strömungsbeeinflussung beim aerodynamischen Design und bei Umströmung des Rotorblattes grundsätzlich erörtert. Insbesondere zeigt Bild 4-3 der Doktorarbeit die Unterteilung eines Rotorblatts in drei Bereiche, nämlich den Nabenbereich, den mittleren Bereich und den Spitzenbereich. Maßnahmen der Strömungsbeeinflussung können beispielsweise die in Bild 5-7 gezeigten Vortexgeneratoren oder Spoiler oder die im Bild 5-8 gezeigten Grenzschichtzäune sein.

Eine herausragende Gestaltung eines Profils im Nabenbereich eines Rotorblattes der Anmelderin ist dort in Bild 4-6 angesprochen. Beispielsweise aus WO 2013/152009 ist ein Ansatz eines Rotorblattanschlusses an die Nabe mit zunehmender Profiltiefe eines Rotorblatts bekannt. In DE 102013/210901 A1 der Anmelderin ist beispielsweise die Kombination dieses Ansatzes mit Grenzschichtzäunen oder dergleichen offenbart.

Eine dazu grundsätzlich abweichende Möglichkeit eines Rotorblattanschlusses sieht eine abnehmende Profiltiefe im Nabenbereich vor, um insofern ausgehend von der Form eines Standardprofils im mittleren Bereich des Rotorblattes über ein ellipsenartigen Profilquerschnitt zu einem etwa kreisförmigen Profilquerschnitt zum Nabenanschluss zu gelangen - dies ist beispielsweise in DE 102008052858 B9 beschrieben, bei welcher eine stumpfe Hinterkante eines Rotorblatts vorgesehen ist.

Grundsätzlich problematisch bei stumpfen Hinterkanten von Rotorblattprofilen - sogenannten Flatback-Profilen - ist jedoch, selbst in Anbetracht des grundsätzlich noch vorhandenen begrenzten Auftriebsverhaltens, die Strömungsablösung an der Hinterkante. Eine gute Übersicht dieser Problematik ist beispielsweise gegeben in dem Artikel von Standish et al. "Aerodynamic Analysis of Blunt Trailing Edge Airfoils" in Journal of Solar Energy Engineering, vol. 125, S. 479 - 486 (November 2003).

Das Deutsche Patent- und Markenamt hat in der Prioritätsanmeldung zur vorliegenden PCT-Anmeldung den folgenden Stand der Technik recherchiert: DE 10 2014 108 917 A1 WO 2014/025 252 A1, WO 2013/153 009 A1, DE 10 2013 210 901 A1, EP 2 568 166 A1, DE 10 2014 206 345 A1, DE 10 2008 052 858 B9 und DE 10 2013 101 232 A1.

Der Erfindung liegt die Aufgabe zugrunde, wenigstens eines der oben genannten Probleme zu beheben oder zu verringern, insbesondere ein Rotorblatt anzugeben, welches im Nabenbereich jedenfalls noch begrenzt gute Auftriebswerte aufweist und gleichwohl die Problematik einer Hinterkantenverwirbelung verringert. Insbesondere soll das Rotorblatt eine wahlweise zunehmende Profildicke oder abnehmende Profildicke im Nabenbereich aufweisen, jedenfalls aber im Bereich dieser Profildicke im Nabenbereich so gestaltet sein, dass es vergleichsweise einfacher transportiert werden kann.

Die Aufgabe betreffend das Rotorblatt wird durch ein Rotorblatt des Anspruches 1 gelöst. Die Erfindung führt auch auf eine Windenergieanlage des Anspruchs 16.

WO 2014/025 252 A1 ist vor dem Prioritätstag der vorliegenden Anmeldung angemeldet und erst danach veröffentlicht und somit nur hinsichtlich der Neuheit betreffend die vorliegende Anmeldung relevant - WO 2014/025252 A1 zeigt ein aerodynamisches Profil mit einem nicht-symmetrischen, eingestülpten schweifartigen Kehlkörper (swallow tail shaped - schwalbenschwanz-artig) an einer Hinterkante des aerodynamischen Profils, das z.B. für eine Windturbine genutzt werden kann. Der nicht-symmetrische, eingestülpte schweifartige (schwalbenschwanz-artige) Kehlkörper weist ein erstes Teil und ein zweites Teil auf, zwischen denen die Kehle (cavity) gebildet ist. Das erste und zweite Teil hat jeweils eine obere und untere jeweils gerade Außenfläche, die entsprechend bündig mit einer Ober- und Unterseite des aerodynamischen Profils fluchtet.

Die Erfindung geht von der Überlegung aus, dass im Zuge der stetigen Weiterentwicklung von Windenergieanlagen der Rotordurchmesser zunehmen wird, um noch mehr Energie aus dem Wind entnehmen zu können. Aufgrund der aerodynamischen und strukturmechanischen Naturgesetze ist es jedoch nicht, beziehungsweise nur bedingt, möglich, lediglich die Länge der Rotorblätter zu vergrößern und zum Beispiel die Breite beziehungsweise Profiliefe beizubehalten, da sich hierdurch ohne weitere aerodynamische Hilfsmittel keine sauberen Strömungszustände im Einsatzbereich um das aerodynamische Profil einstellen kann. Aufgrund der immer größer werdenden Fläche der Rotoren steigt somit auch der Schallemissionspegel der gesamten Windenergieanlage, den es ebenfalls zu berücksichtigen gilt.

Die Erfindung hat erkannt, dass grundsätzlich die Gestaltung eines Rotorblattes mit einem aerodynamischen standardartigen Profil im Spitzenbereich und mittleren Bereich zu einem Rotorblatt mit aerodynamischen Dickenprofil --insbesondere Flatback-Profil mit stumpfer Hinterkante, insbesondere im Nabenbereich-- vorteilhaft ist. Dies ermöglicht eine Blatttiefenreduzierung bei dennoch gleichbleibendem Auftriebsverhalten.

Die Erfindung hat, ausgehend von dieser Überlegung, erkannt, dass es grundsätzlich weiterhin vorteilhaft ist --das heißt, dem Konzept der Anmelderin entsprechend mit weiter zunehmender Profildicke (jedoch nicht zwingend) wie in WO 2013/153009 A1- im Bereich des Nabenbereichs wenigstens teilweise das Rotorblatt als Dickenprofil zu gestalten, das an seiner Hinterkante eine Dornerweiterung aufweist. Als Hinterkante ist, insbesondere nach diesem Verständnis, eher die flache Hinterkante zu verstehen und in Bezug auf diese wird die Dornerweiterung betrachtet. Eine tatsächliche, insofern spitze, Hinterkante, ist dann am Ende der Dornerweiterung gebildet.

Aufgrund einer solchen Dornerweiterung lässt sich nicht nur die Profiltiefe im Nabenbereich vorteilhaft gering gestalten, sondern darüber hinaus auch eine Wirbelablösung und damit die Schallemission vorteilhaft gestalten.

Erfindungsgemäß hat es sich als vorteilhaft erwiesen, dass im Bereich des Nabenbereichs wenigstens teilweise das Rotorblatt ein Dickenprofil aufweist und das Dickenprofil an der Saugseite eine erste Dornerweiterung an der Hinterkante und an der Druckseite eine zweite Dornerweiterung an der Hinterkante aufweist.

Solche und andere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Im Bereich des Nabenbereichs ist das Dickenprofil vorteilhaft als Flatback-Profil ausgeführt, das heißt mit stumpfer Hinterkante ausgeführt. im Nabenbereich ist die Hinterkante vorteilhaft eine flache Hinterkante, die eine relative Dicke aufweist, insbesondere eine relative Dicke von mehr als 5% aufweist.

Das Dickenprofil hat vorteilhaft eine relative Dicke von mehr als 40%, insbesondere mehr als 45%. Eine relative Dorntiefe, gemessen von der Hinterkante, liegt vorteilhaft von unterhalb von 25% und/oder wenigstens oberhalb einer relativen Dicke der Hinterkante, insbesondere oberhalb von 5%. Hier ist wieder insbesondere nach diesem Verständnis eher die flache Hinterkante zu verstehen und in Bezug auf diese wird die relative Dicke und die Dornerweiterung betrachtet.

Ein solches auch als Rosendornprofil bezeichnetes Profil entspricht einer Modifikation gemäß der vorgenannten Weiterbildung eines Flatback-Profils und entspricht hierbei einer vorteilhaften Weiterbildung der Erfindung.

Grundsätzlich kann gemäß dem Konzept der Erfindung eine weitere Reduzierung der Profiltiefe, beziehungsweise der Rotorblattbreite erreicht werden. Das Dickenprofil hat vorteilhaft eine relative Dicke von mehr als 50%, insbesondere mehr als 75%.

Durch das vorzugsweise doppelt --das heißt an Saug- und Druckseite-- dünn auslaufende Endkantenstück einer Dornerweiterung wird die Schallemission im Vergleich zum Flatback-Profil reduziert.

Durch die besondere Form der Hinterkantendornen kann eine kontrollierte Hinterkantenwirbelausbildung erreicht werden. Es zeigt sich nämlich, dass insbesondere bei doppelt ausgeführten, an Saug- und Druckseite angebrachten Dornen, in der Kehle zwischen dem saugseitigen und dem druckseitigen Dorn (jedenfalls aber unterhalb oder oberhalb eines Dorns) ein Wirbel stabilisiert werden kann und gleichwohl das Profil im Bereich des Nabenbereichs vergleichsweise gute Auftriebswerte hat. Vorteilhaft zeigt sich, dass sich stabile, wenn auch pulsierende oder oszillierende Ausbildungen eines Wirbels in der Kehle oder unterhalb oder oberhalb eines Dorns, selbst bei turbulenterer Strömung beziehungsweise unterschiedlichen Winden, möglich ist. Durch eine stabile, wenn auch pulsierende oder oszillierende Ausbildungen eines Wirbels in der Kehle oder unterhalb oder oberhalb eines Dorns wird die effektive Profiltiefe erhöht und damit ein Auftriebsverhalten des Profils verbessert.

Vorteilhaft liegt eine relative Dornentiefe gemessen an der Hinterkante unterhalb von 25% und/oder wenigstens oberhalb einer relativen Dicke der Hinterkante, insbesondere oberhalb von 5%, wobei vorteilhaft eine maximale relative Dorntiefe zwischen 15 und 25% liegt. Hier ist wieder ist insbesondere nach diesem Verständnis eher die flache Hinterkante zu verstehen und in Bezug auf diese wird die relative Dicke und die relative Dorntiefe der Dornerweiterung betrachtet.

Vorteilhaft ist im Bereich des Nabenbereichs wenigstens teilweise Hinterkante mit einer Serrationsform versehen, das heißt, sozusagen als gezackte Hinterkante ausgeführt. Eine gezackte Hinterkante kann auf der Saugseite und/oder an der Druckseite, oder beziehungsweise nur an der Druck- und/oder Saugseite oder auch über den gesamten flachen Verlauf der Hinterkante ausgeführt sein. Hier ist wieder ist insbesondere nach diesem Verständnis eher die flache Hinterkante aber auch ggfs. eine spitze Hinterkante der Dornerweiterung zu verstehen und in Bezug auf diese wird die gezackte Hinterkante betrachtet; d.h. insbesondere ist eine Serrationsform am Ende der Dornerweiterung angebracht.

Als vorteilhaft hat sich eine erfindungsgemäße Weiterbildung erwiesen, bei der im Bereich des Nabenbereichs wenigstens teilweise das Dickenprofil auf der Saug- und/oder Druckseite einen Strömungsstabilisator aufweist. Insbesondere kann ein Strömungsstabilisator ausgewählt sein aus der Gruppe bestehend aus Spoiler, Grenzschichtzaun, Grenzschichtabsaugung.

Als vorteilhaft hat sich zusätzlich oder alternative auch eine erfindungsgemäße Weiterbildung erwiesen, bei der im Bereich des Nabenbereichs wenigstens teilweise das Dickenprofil auf der Saug- und/oder Druckseite einen Vortexgenerator aufweist. Insbesondere ist ein Vortexgenerator ausgewählt aus der Gruppe bestehend aus: Finne, Noppe, Dimpel, Steg oder dergleichen Turbulatoren, eine Ausblas- oder Absaugstruktur. Mit einem Vortexgenerator kann eine Grenzschichtdicke bei einer turbulenten Strömung vergrößert werden; d.h. größer als bei einer laminaren Strömung. Da die Strömungsgeschwindigkeit jedoch mit wachsendem Abstand schneller zunimmt als bei einer Laminarströmung führt dies zu einer höheren Energie der Strömung und die höhere Energie macht die Strömung unempfindlicher gegen die Ablösung von der Rotorblattfläche. Vortexgeneratoren oder dergleichen Turbulatoren sind allgemein kleine künstlich aufgebrachte Oberflächenstörungen. Sie erzeugen Verwirbelungen und überführen eine laminare Grenzschichtströmung in eine turbulente. Die Strömungsablösung wird verzögert. Turbulatoren umfassen beispielsweise querlaufende Schienen, kleine vertikale Bleche oder Bohrungen. Eine weitere Möglichkeit, die Grenzschichtströmung zum Umschlagen zu bringen, ist der Ausblas- oder Absaug-Turbulator. Das ist eine Reihe von feinen Bohrungen, durch die Luft quer zur Strömungsrichtung in die Grenzschicht eingeblasen wird oder abgesaugt wird.

Im Rahmen einer besonders bevorzugten Weiterbildung ist vorgesehen, dass in einem ersten Bereich, nämlich im Nabenbereich in einem ersten naben-nahen Bereich, das Dickenprofil an seiner Hinterkante die Dornerweiterung aufweist und in einem zweiten Bereich, nämlich im Nabenbereich in einem zweiten naben-fernen Bereich, das Dickenprofil die Hinterkante eine flache Hinterkante ohne die Dornerweiterung ist.

Das Konzept eines lokalen Maximums zwischen Wurzel und Spitze des Rotorblattes ist besonders vorteilhaft in Kombination mit der erfindungsgemäßen Dornerweiterung umsetzbar. Vorzugsweise ist vorgesehen, dass im Nabenbereich zwischen dem ersten Bereich, insbesondere dem naben-nahen Bereich im Nabenbereich, und dem zweiten Bereich, insbesondere dem naben-fernen Bereich im Nabenbereich, das Dickenprofil eine maximale Profiltiefe aufweist.

Vorzugsweise ist vorgesehen, dass eine relative Profildicke, die als Verhältnis von Profildicke zu Profiltiefe definiert ist, in einem Bereich, vorzugsweise mittleren Bereich, zwischen Rotorblattwurzel des Nabenbereichs und Rotorblattspitze des Spitzenbereichs ein lokales Maximum aufweist.

Vorzugsweise kann die relative Profildicke des lokalen Maximums 35% bis 50% betragen und/oder das Rotorblatt im Bereich des lokalen Maximums eine Profiltiefe von 1500 mm bis 3500 mm aufweisen.

Vorzugsweise ist vorgesehen, dass das Rotorblatt aus einem ersten und einem zweiten Rotorblattabschnitt zusammengesetzt ist und der erste Rotorblattabschnitt die Rotorblattwurzel und der zweite Rotorblattabschnitt die Rotorblattspitze aufweist, und der erste und der zweite Rotorblattabschnitt an einer Trennstelle miteinander verbunden sind. Vorzugsweise ist die Trennstelle im mittleren Bereich zwischen Rotorblattwurzel und Rotorblattspitze und/oder im Bereich des lokalen Maximums angeordnet.

Als besonders vorteilhaft erweisen sich die vorgenannten Weiterbildungen bei einem Rotorblatt mit absoluten Abmessungen wie im Folgenden aufgeführt.

Vorzugsweise ist vorgesehen, dass das Rotorblatt in einem ersten Bereich, insbesondere einem naben-nahen Bereich im Nabenbereich, eine absolute Profiltiefe von wenigstens 3900 mm aufweist, insbesondere eine absolute Profiltiefe in einem Bereich von 4000 mm bis 8000 mm aufweist.

Diese absoluten Profiltiefen fallen um 15%-30% geringer aus als bei einem anderen Blatt ohne Dornerweiterung aber mit vergleichbaren Auftriebswerten.

Vorzugsweise ist vorgesehen, dass das Rotorblatt ausgehend von der Rotorblattwurzel im Bereich von 90% bis 95% der Gesamtlänge, eine absolute Profiltiefe von maximal 1000 mm, insbesondere eine absolute Profiltiefe in einem Bereich von 700 mm bis 400 mm aufweist.

Auch diese absoluten Profiltiefen fallen um 15%-30% geringer aus als bei einem anderen Blatt ohne Dornerweiterung aber mit vergleichbaren Auftriebswerten.

Vorzugsweise ist vorgesehen, dass das Rotorblatt im mittleren Bereich (II) eine Profiltiefe aufweist, welche etwa 20% bis 30%, insbesondere etwa 25%, der Profiltiefe im Nabenbereich entspricht.

Im Rahmen einer weiteren Weiterbildung kann vorgesehen sein, dass
- im Nabenbereich in einem ersten Bereich, insbesondere einem naben-nahen Bereich im Nabenbereich, das Dickenprofil an seiner flachen Hinterkante eine erste relative Dicke und die Dornerweiterung aufweist, und
- im Nabenbereich in einem zweiten Bereich, insbesondere einem naben-fernen Bereich im Nabenbereich (I), die Hinterkante des Dickenprofils eine spitze Hinterkante ohne Dornerweiterung oder eine flache Hinterkante einer zweiten geringeren relativen Dicke ebenfalls mit der Dornerweiterung aufweist.

Solche und andere weitere vorteilhafte Weiterbildungen der Erfindung sind den weiteren Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Das Dickenprofil hat vorteilhaft eine relative Dicke von mehr als 50%, insbesondere mehr als 75%. Vorzugsweise ist für das Rotorblatt das Dickenprofil gebildet in Form eines im wesentlichen elliptischen, ovalen oder zylindrischen Kerns. Insbesondere für den Fall einer idealen oder ovalen Ellipse hat das Dickenprofil vorteilhaft eine relative Dicke von mehr als 50%, insbesondere mehr als 75%. Vorzugsweise entwickelt sich zum Nabenanschluss hin der Kern zu einer zylindrischen Form, d.h. das Rotorblatt hat ein Dickenprofil mit einer relativen Dicke von bis zu 100%.

Besonders vorteilhaft ist der Kern bei einer relativen Dicke von mehr als 75% als ein Wickelteil gebildet. Insbesondere ist dazu der Kern als (z.B. Glas- oder Kohle- )faserverstärktes (GFK)-Profil gebildet. Dazu werden beispielsweise Filamente oder Matten oder dergleichen Fasern auf einen Dorn gewickelt, der später wieder entfernt wird, sodass der Kern als Wickelteil, insbesondere GFK-Wickelteil verbleibt.

Das Rotorblatt ist besonders effizient im Nabenbereich herstellbar, indem an den Kern als vorgenanntes Dickenprofil mit relativer Dicke von mehr als 50%, insbesondere mehr als 75%, an seiner Hinterkante mit einer relativen Hinterkanten-Dicke die Dornerweiterung angebracht wird, insbesondere lediglich die Dornerweiterung angebracht wird. Ein im wesentlichen zylindrisches oder ovales Wickelteils mit einem Dickenprofil einer vorteilhaft relativen Dicke von mehr als 50%, insbesondere mehr als 75% und einer Dornerweiterung ist in diesem Sinne als besonders bevorzugte Ausführungsform in Fig, 12 gezeigt.

Der zylindrische oder ovale Kern, vorzugsweise das im wesentlichen zylindrische oder ovale Wickelteil, weist an der Saugseite die erste Dornerweiterung an der Hinterkante und an der Druckseite die zweite Dornerweiterung an der Hinterkante unter Ausbildung einer Kehle mit flachem Grund zwischen der ersten und zweiten Dornerweiterung auf. Insbesondere sollte eine relative und/oder absolute Profildicke, die als Verhältnis von Profildicke zu Profiltiefe definiert ist, von einer Rotorblattwurzel zu einer Rotorblattspitze abnehmen.

Vorzugsweise ist der flache Grund einer Kehle zwischen der ersten und zweiten Dornerweiterung nach außen gewölbt, jedenfalls im naben-nahen Bereich des Nabenbereichs. Vorzugsweise ist der flache Grund einer Kehle zwischen der ersten und zweiten Dornerweiterung nach innen gewölbt, jedenfalls im naben-fernen Bereich des Nabenbereichs.

Bei dem Rotorblatt sind besonders bevorzugt die erste und zweite Dornerweiterung an der Hinterkante bei einem Umfangswinkel unterhalb von 60° angeordnet, wobei der Umfangswinkel gemessen ist ausgehend von einer Profilachse, also ohne Anstellwinkel ausgehend von einer Horizontalen.

Im Rahmen einer besonders bevorzugten Weiterbildung weist im Nabenbereich, insbesondere im naben-nahen Bereich des Nabenbereichs, an der Saugseite die erste Dornerweiterung an der Hinterkante eine relative Dorntiefe auf, die geringer ist als eine relative Dorntiefe der zweiten Dornerweiterung an der Hinterkante an der Druckseite.

Im Rahmen einer besonders bevorzugten Weiterbildung weist im Nabenbereich, insbesondere im naben-nahen Bereich des Nabenbereichs, an der Druckseite die zweite Dornerweiterung an der Hinterkante eine Ausrichtung auf, die stärker zur Druckseite geneigt ist als eine Ausrichtung der ersten Dornerweiterung an der Hinterkante an der Saugseite.

Im Rahmen einer besonders bevorzugten weiteren Weiterbildung ist vorgesehen, dass im Nabenbereich an der Saugseite die erste Dornerweiterung an der Hinterkante bei weitgehend festem Umfangswinkel in Richtung des Spitzenbereichs verläuft und an der Druckseite die zweite Dornerweiterung an der Hinterkante bei weitgehend abnehmendem Umfangswinkel in Richtung des Spitzenbereichs verläuft. Mit anderen Worten ist beispielsweise eine saugseitige Dornerweiterung bei weitgehend festem Umfangswinkel an einer weitgehend festen Position zwischen einer 1Uhr- und 3Uhr-Position, z.B. etwa bei einer 2Uhr-Position,angeordnet und eine druckseitige Dornerweiterung ist beispielsweise bei einer Position zwischen einer 5Uhr- und 3Uhr-Position, angeordnet; vorzugsweise mit stetig abnehmender Position von einer 5Uhr- auf eine 3Uhr-Position in Richtung des Spitzenbereichs verlaufend.

Vorzugsweise laufen im Nabenbereich die erste Dornerweiterung an der Hinterkante und die zweite Dornerweiterung an der Hinterkante zusammen, insbesondere bei einer Position eines Umfangswinkel von 0° oder bei einem negativen Umfangswinkel. Mit anderen Worten ist vorteilhaft vorgesehen, dass die saugseitige Dornerweiterung und die druckseitige Dornerweiterung zu einer spitzen Hinterkante zusammenlaufen; vorzugsweise bei einem Ulmfangswinkel von 0°; d.h. (ohne Anstellwinkel/Twist) bei einer 3Uhr-Position.

Vorzugsweise ist vorgesehen, dass im Nabenbereich an der Druckseite die zweite Dornerweiterung an der Hinterkante einen zur Druckseite hin gewölbten Verlauf einer druckseitigen Unterseite hat, insbesondere einen zur Druckseite hin gewölbten Verlauf einer druckseitigen Unterseite mit zunehmender Krümmung - also sozusagen mit einer negativen Krümmung verläuft. Zusätzlich oder alternativ kann vorgesehen sein, dass im Nabenbereich an der Druckseite die zweite Dornerweiterung an der Hinterkante eine zur Druckseite gewölbte Lippe, insbesondere eine Spoiler-Lippe oder Guerney-Flap, aufweist, insbesondere mit einem aerodynamischen Übergang zu einem zur Druckseite gewölbten Verlauf einer druckseitigen Unterseite.

Es zeigt sich, dass mit diesen vorgenannten Weiterbildungen vorzugsweise ein Rotorblatt realisiert sein kann, das am Profil Strömungsgeschwindigkeiten einer normierten Strömung im Bereich einer Kehle zwischen der ersten und zweiten Dornerweiterung aufweist, die in Ma zwischen 0.01 Ma und max. 0.1 Ma, insbesondere zwischen 0.02 Ma und max. 0.06 Ma liegen.

Es zeigt sich auch, dass mit diesen vorgenannten Weiterbildungen vorzugsweise ein Rotorblatt realisiert sein kann, das eine Gleitzahl (Lift/Drag-Verhältnis) aufweist, die bei Anstellwinkeln (Twist) von bis zu 5° oberhalb von 1 und unterhalb von 10 liegen, insbesondere von einem naben-nahen Bereich des Nabenbereichs (I) zu einem naben-fernen Bereich des Nabenbereichs eine Gleitzahl (Lift/Drag-Verhältnis) zunimmt und/oder ein Anstellwinkel Anstellwinkel (Twist) eines Profils des Rotorblatts abnimmt.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung, können sowohl einzeln als auch in beliebiger Kombination für die Weiterbildung der Erfindung wesentlich sein. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre, im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig.1: eine schematische Darstellung einer bevorzugten Windenergieanlage;
- Fig.2-Fig.5: bevorzugte Profilformen eines Rotorblatts für eine bevorzugte Ausführungsform eines Rotorblatts im Spitzenbereich (III) (Fig.2), im mittleren Bereich (II) (Fig.3) und im Nabenbereich (I) (Fig.4, 5);
- Fig.6: ein schematischer Verlauf von Profilquerschnitten entlang eines Rotorblatts vom Nabenbereich über den mittleren Bereich bis zum Spitzenbereich;
- Fig.7: eine Darstellung eines Rosendornprofils eines Rotorblattprofils im Nabenbereich mit Kehlwirbel in stabilisierter Form;
- Fig.8: eine Koordinatendarstellung (A) des Rosendornprofils der Fig.7 mit einem dazu gehörigen Strömungsverlauf (B);
- Fig.9: eine erste Seitenansicht entlang der Länge des Rotorblatts mit einem Hinterkantenprofil, das das Rosendornprofil der bevorzugten Ausführungsform trägt;
- Fig.10: eine andere Ansicht des Rotors, wobei in Fig.Fig.10 das Hinterkantenprofil mit Rosendornprofil gebildet ist und einmal mit Serrationsform beziehungsweise ohne Serrationsform gezeigt ist;

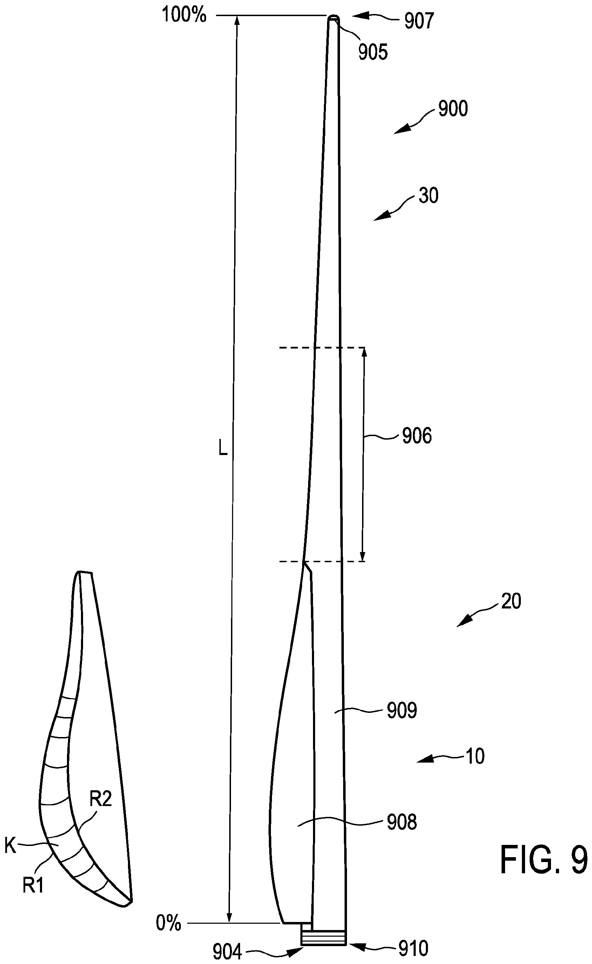

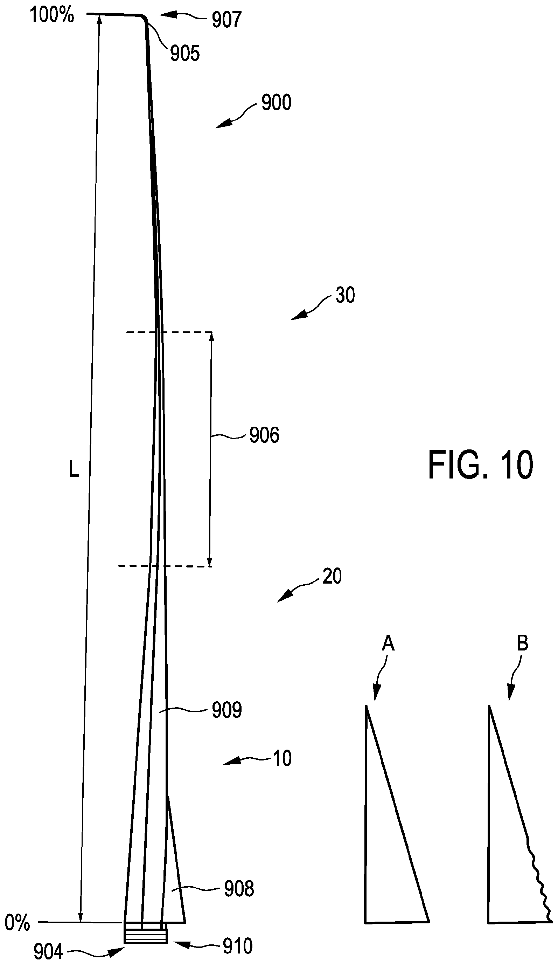

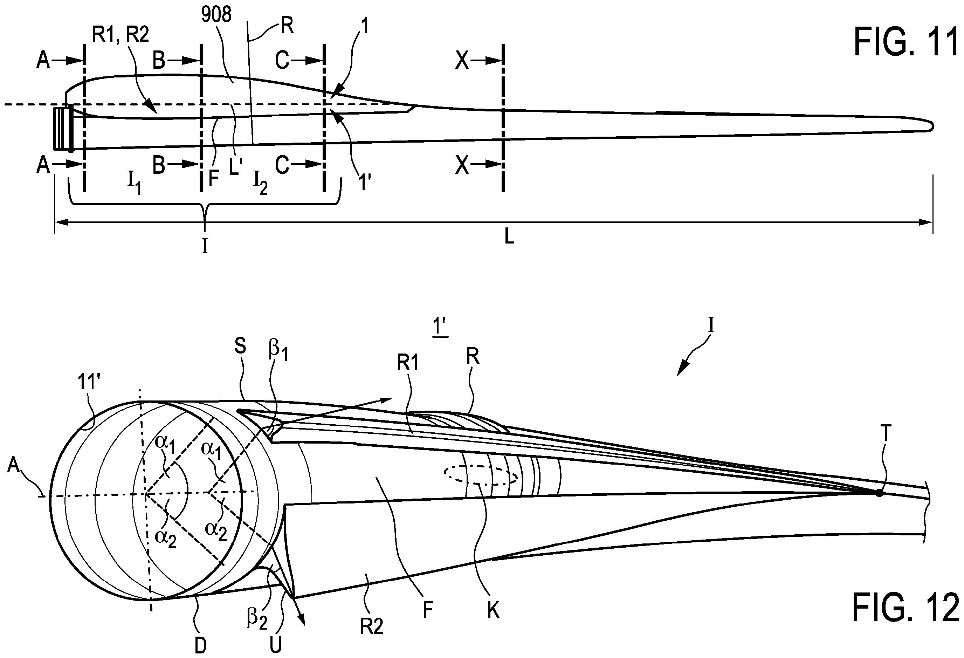

- Fig.11: eine schematische Kontur-Darstellung in Aufsicht auf eine bevorzugte Ausführungsform eines Rotorblatts, wobei im Nabenbereich (I) eine Dornerweiterung vorgesehen ist - in einer ersten Abwandlung einer bevorzugten Ausführungsform ist die Dornerweiterung Teil eines Hinterkantenprofils ähnlich wie in Fig.9 und Fig.10, beispielsweise als ein Hinterkantenkasten - in einer zweiten Abwandlung einer bevorzugten Ausführungsform ist die Dornerweiterung im Nabenbereich an einer Hinterkante gebildet, wobei die Profiltiefe unterhalb der gestrichelten Linie als Hinterkante verbleibt, ein Hinterkantenkasten kann beispielsweise entfallen;
- Fig.12: eine räumliche Darstellung einer bevorzugten Ausführungsfrom eines Rotorblatts im Nabenbereich (I) mit erkennbarer Dornerweiterung im Nabenbereich, wobei die Profiltiefe unterhalb der gestrichelten Linie als Hinterkante verbleibt gemäß der in Fig.11 dargestellten zweiten Abwandlung einer bevorzugten Ausführungsform;
- Fig.13: (A) ein erstes Dickenprofil im naben-nahen Bereich (I.1) des Nabenbereichs (I), (B) ein zweites Dickenprofil im mittleren Nabenbereich (I) und (C) ein drittes Dickenprofil im naben-fernen Bereich (I.2) des Nabenbereichs des Rotorblatts der Fig.12 - alle Dickenprofile weisen eine auf Schallgeschwindigkeit normierter Geschwindigkeitsverteilung und daraus erkennbarem Kehlwirbel in einer Kehle zwischen der ersten und zweiten Dornerweiterung auf, wobei die Strömungs-Geschwindigkeiten im Bereich von zwischen 0.01 Ma und max. 0.1 Ma, insbesondere zwischen 0.02 Ma und max. 0.06 Ma liegen;
- Fig.14: in Ansichten (A), (B) und (C) jeweils Gleitzahlen (Lift/Drag-Verhältnisse) der Dickenprofile der Ansichten (A), (B) und (C) der Fig.13 für ein Rotorblatt der zweiten alternativen Abwandlung gemäß Fig.12 und Fig.13, wobei ein verbesserter Auftrieb aufgrund der durch den Kehlwirbel verlängerten effektiven Profiltiefe erreicht wird.

Fig.1 zeigt eine Windenergieanlage 100 mit einem Turm 102, der auf einem Fundament 103 errichtet ist. Am oberen, dem Fundament 103 gegenüberliegenden Ende befindet sich eine Gondel 104 (Maschinenhaus) mit einem Rotor 105, der eine Rotornabe 106 und daran angebrachte Rotorblätter 107, 108 und 109 aufweist. Der Rotor 105 ist mit einem elektrischen Generator im Innern der Gondel 104 zur Wandlung von mechanischer Arbeit in elektrische Energie gekoppelt. Die Gondel 104 ist drehbar auf dem Turm 102 gelagert, dessen Fundament 103 die notwendige Standsicherheit gibt.

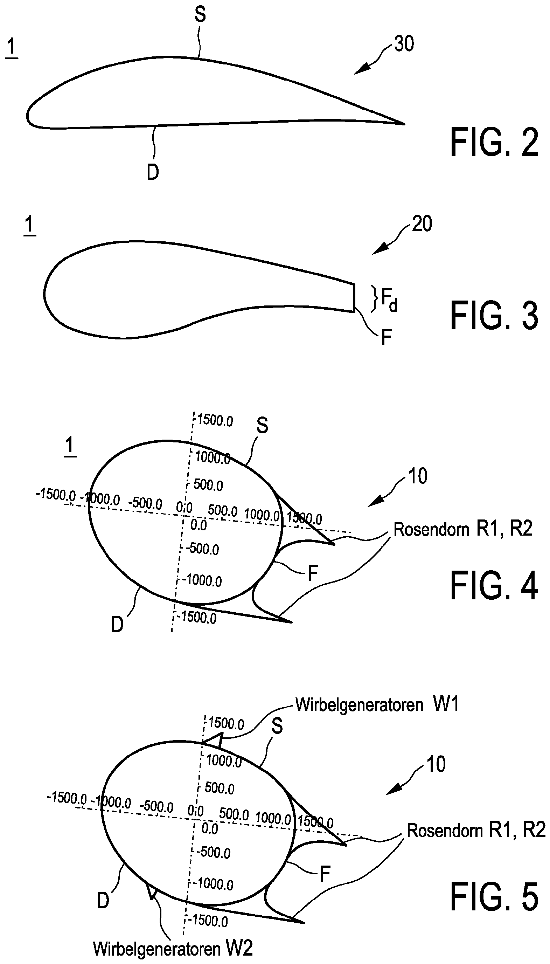

Für den Spitzenbereich III zeigt Fig.2 ein Rotorblattprofil 30 im Wesentlichen gemäß einem Standardprofil wobei die Saugseite S im Wesentlichen konvex und die Druckseite D im Wesentlichen konkav oder gerade ausgeführt ist.

Fig.3 zeigt ein Rotorblattprofil 20 eines Rotorblatts 1 im Nabenbereich mit stumpfer Hinterkante F, wobei die Hinterkante eine relative Hinterkantendicke Fd aufweist, die durchaus im Bereich von 5% oder mehr liegen kann. Die Profile 30, 20 der Fig.2, Fig.3 können jeweils auch im mittleren Bereich beziehungsweise Nabenbereich vorliegen.

Fig.4 zeigt für ein Rotorblatt 1 der bevorzugten Ausführungsform ein Rosendornprofil eines Rotorblattprofils 10. Das Rotorblattprofil im Nabenbereich I weist als Dickenprofil mit einer relativen Dicke von mehr als 45% und einer Hinterkante von mehr als 5% an der Saug- und der Druckseite S, D jeweils einen Rosendorn in Form einer Dornerweiterung R1, R2 auf. Die Dorntiefe gemessen von der Hinterkante F liegt unterhalb von 25% und oberhalb einer relativen Dicke der Hinterkante, nämlich besonders oberhalb von 5%. Das Rotorblattprofil ist bereits mit einem Anstellwinkel (getwistet) gezeigt, der jedenfalls im naben-nahen Bereich des Nabenbereichs zwischen 0° und 70°, insbesondere zwischen 0° und 45°, liegen kann und dabei eher zunimmt.

Fig.5 zeigt das Rotorblattprofil der Fig.4 mit zusätzlichen Wirbelgeneratoren W1, W2, wobei die Wirbelgeneratoren auf der Saug- und der Druckseite S, D angeordnet sind.

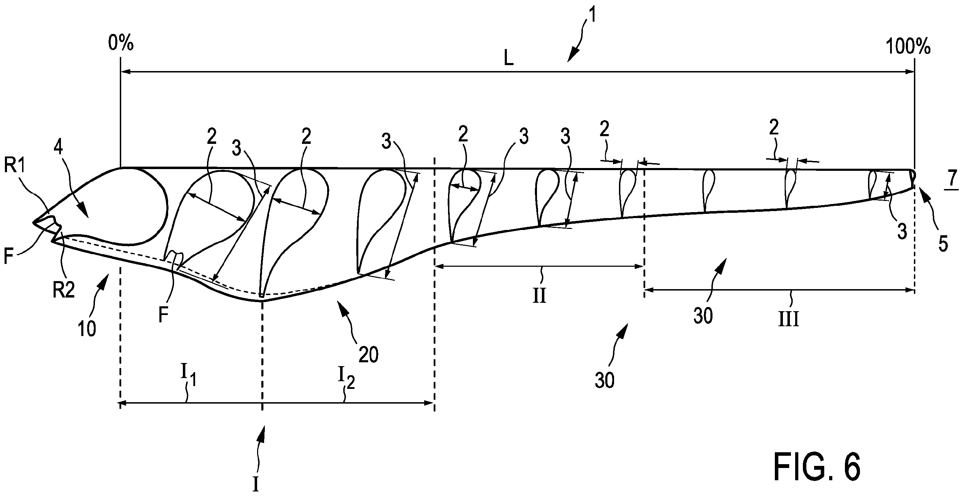

Fig.6 zeigt eine Verteilung verschiedener Profilgeometrien eines Rotorblattes 1 einer Ausführungsform. In dem Rotorblatt 1 sind abschnittsweise Profildicken 2 und Profiltiefen 3 dargestellt. Das Rotorblatt 1 weist an einem Ende die Rotorblattwurzel 4 und an dem dazu abgewandten Ende einen Anschlussbereich 5 zum Anbringen einer Rotorblattspitze auf. An der Rotorblattwurzel 4 weist das Rotorblatt eine große Profiltiefe 3 auf. Im Anschlussbereich 5 ist die Profiltiefe 3 dagegen sehr viel kleiner. Die Profiltiefe nimmt, ausgehend von der Rotorblattwurzel 4, die auch als Profilwurzel bezeichnet werden kann, bis zu einem mittleren Bereich II deutlich ab.

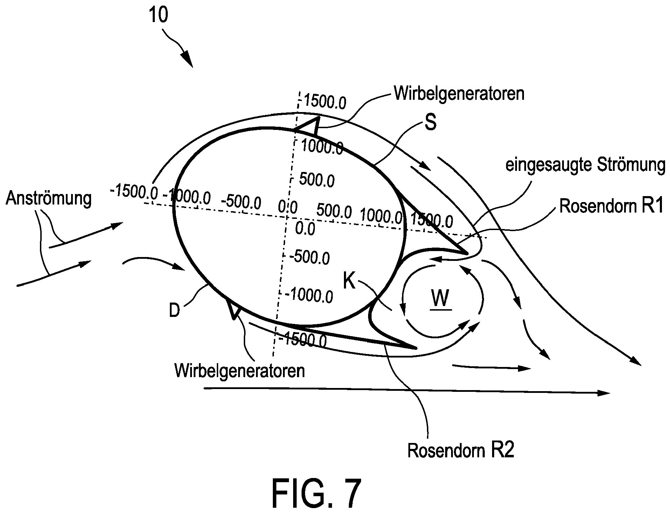

Fig.7 zeigt, dass in der Kehle K des Blattprofils zwischen dem saugseitigen und dem druckseitigen Rosendorn, das heißt, in der Kehle K zwischen saugseitiger und druckseitiger Dornerweiterung R1, R2 ein vergleichsweise stabiler Kehlwirbel W in Richtung der Saugseite ausgebildet ist. Der linksdrehende Kehlwirbel saugt Luft von der Saugseite S in die Kehle K zwischen saugseitiger und druckseitiger Dornerweiterung R1, R2 ein und verhindert ein Ablösen der Strömung auf der Saugseite. Die Druckseitenströmung an der Druckseite D stabilisiert zusätzlich den Kehlwirbel W. Zusammen mit dem vergleichsweise stabilen Kehlwirbel weist das Blattprofil im Nabenbereich I insofern eine durch den Kehlwirbel verlängerte Profiltiefe auf, sodass eine längere Strömlinie gebildet wird, wenn man so will, ist die Profiltiefe des Blattprofils durch den stabilen Kehlwirbel verlängert. Dies führt zu verbesserten Auftriebswerten, solange der Kehlwirbel stabil ist. Dies wird aber durch den saug- und druckseitigen Rosendorn der Dornerweiterung gewährleistet. Zusätzlich ist das Rotorblattprofil der Fig.7 mit Wirbelgeneratoren versehen, sodass sich eine Ablösung einer Anströmung in der Grenzfläche nicht vorzeitig ergibt. Dies führt zu stabilen Druckverhältnisse für den Kehlwirbel in der Kehle zwischen dem saugseitigen und dem druckseitigen Rosendorn der Dornerweiterung des Blattprofils. Fig.7 zeigt eine Umströmung des Rotorblatts mit Strömungen im Anstellwinkel von 7° - das Konzept der Erfindung ist jedoch keinesfalls auf einen solchen kleinen Anstellwinkel beschränkt sonder zielt vielmehr eher auf den ungünstigeren Fall eines Anstellwinkels von 30° ab. Jedoch zeigt Fig.7 das Grundprinzip und die Möglichkeit deutlich Material einzusparen mittels des Einsatzes der Rosendorne. Auch die Wirbelgeneratoren können kleiner ausfallen als eingezeichnet; die Rosendorne werden also verhältnismäßig kleiner.

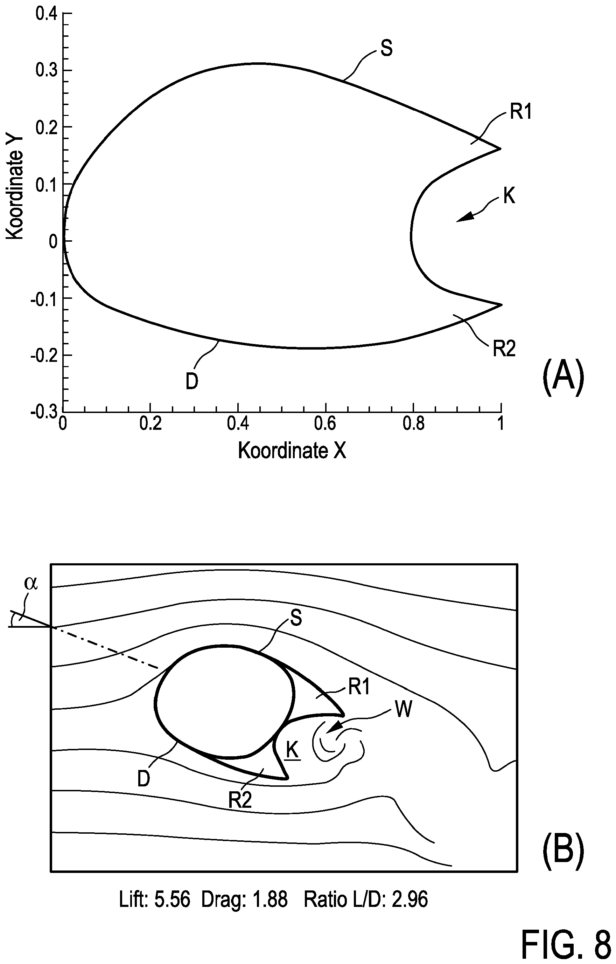

Fig.8 zeigt in (A) eine Koordinatendarstellung des Rosendornprofils der Fig.7 mit einem dazu gehörigen Strömungsverlauf (B); dabei ist insbesondere die Bildung der in Fig.7 bezeichneten eingesaugten Strömung als stabilisierter Wirbel W zwischen den Dornen R1, R2 zu erkennen.

Fig.9 zeigt eine Seitenansicht eines Rotorblattes 900 einer Ausführungsform über seine Gesamtlänge I, d.h. von 0% bis 100%. Das Rotorblatt 900 weist an einem Ende eine Rotorblattwurzel 904 und an dem dazu abgewandten Ende eine Rotorblattspitze 907 auf. Die Rotorblattspitze 907 ist an einem Anschlussbereich 905 mit dem restlichen Teil des Rotorblattes verbunden. An der Rotorblattwurzel 904 weist das Rotorblatt eine große Profiltiefe auf. Im Anschlussbereich 905 und an der Rotorblattspitze 907 ist die Profiltiefe dagegen sehr viel kleiner. Die Profiltiefe nimmt, ausgehend von der Rotorblattwurzel 904, die auch als Profilwurzel bezeichnet werden kann, bis zu einem mittleren Bereich 906 deutlich ab. In dem mittleren Bereich 906 kann eine Trennstelle vorgesehen sein (hier nicht dargestellt). Vom mittleren Bereich 906 bis zum Anschlussbereich 905 ist die Profiltiefe nahezu konstant.

Das Rotorblatt 900 weist im Bereich der Rotorblattwurzel 904 eine zweigeteilte Form auf. Das Rotorblatt 900 besteht somit aus einem Grundprofil 909, an das in dem Bereich der Rotorblattwurzel 904 ein weiterer Abschnitt 908 zur Erhöhung der Rotorblatttiefe des Rotorblattes 900 angeordnet ist. Der Abschnitt 908 ist dabei beispielsweise an das Grundprofil 909 angeklebt. Eine solche zweigeteilte Form ist einfacher in der Handhabung beim Transport zum Aufstellungsort und einfacher zu fertigen.

Weiterhin ist in Fig.9 ein Nabenanschlussbereich 910 zu erkennen. Über den Nabenanschlussbereich 910 wird das Rotorblatt 900 an die Rotornabe angeschlossen.

Fig.10 zeigt eine weitere Seitenansicht des Rotorblattes 900 der Fig.9. Es ist das Rotorblatt 900 mit dem Grundprofil 909, dem Abschnitt 908 zur Erhöhung der Rotorblatttiefe, der mittlere Bereich 906, die Rotorblattwurzel 904 und der Nabenanschlussbereich 910 sowie der Anschlussbereich 905 zur Rotorblattspitze 907 zu erkennen. Die Rotorblattspitze 907 ist als ein sogenanntes Winglet ausgeführt. Dadurch werden Wirbel an der Rotorblattspitze verringert.

In dem Detail der Fig.9 ist der Abschnitt 908 als ein Hinterkantenstück mit der Kehle K zwischen dem saugseitigen und druckseitigen Rosendorn R1, R2 gezeigt. Insgesamt fällt die Tiefe des Hinterkantenstücks jedoch geringer aus, da infolge der bevorzugten stabilen Kehlwirbelausbildung die effektive relative Profildicke des Blattprofils im Nabenbereich vergrößert ist.

Im Detail der Fig.10 ist das Hinterkantenstück einmal in Ansicht A ohne Serrationsform und einmal in Ansicht B mit Serrationsform gezeigt. Je nach Bedarf läßt sich insbesondere durch eine Serrationsform oder andere strömungsstabilisierende Maßnahmen die Kehlwirbelausbildung unterstützen und damit die effektive relative Profildicke des Blattprofils im Nabenbereich erhöhen.

Die Fig.11 zeigt eine --im oberen Teil erkennbar-- bevorzugte Ausführungsform als eine erste Abwandlung mit einem Hinterkantenstück --beispielsweise in Form eines Hinterkantenkastens, der separat angesetzt wird-- wie dieses bereits als Abschnitt 908 in Fig.9 und Fig.10 gezeigt ist.

Das entsprechend mit einer im Nabenbereich I erhöhter Profiltiefe gezeigte Rotorblatt 1 wurde insbesondere in Zusammenhang mit der Fig.9 und Fig.10 beschrieben - mit dem Hinterkantenstück mit Dornerweiterung, d.h. als Abschnitt 908, fällt die Tiefe des Hinterkantenstücks bei ähnlichen Auftriebs- und Gleitwerten geringer aus als bei einem Hinterkantenstück ohne Dornerweiterung. Die Profiltiefe eines solchen Rotorblattes 1 kann also vergleichsweise reduziert werden aufgrund der vorgenannten stabilen Kehlwirbelausbildung so dass sich eine effektive relative Profildicke des Blattprofils im Nabenbereich vergrößern lässt. Da sich infolge der bevorzugten stabilen Kehlwirbelausbildung die effektive relative Profildicke des Blattprofils im Nabenbereich vergrößert eignet sich dies bevorzugt, aber nicht zwangsläufig, zur Umsetzung eines Rotorblatts 1 wie es in Fig.6 gezeigt ist.

Fig.11 zeigt auch eine weitere besonders bevorzugte Ausführungsform als zweite Abwandlung, die hier als Rotorblatt 1' bezeichnet ist. Bei dieser zweiten Abwandlung ist Dornerweiterung im Nabenbereich "direkt" an einer Hinterkante F des Kerns des Rotorblattes gebildet, wobei die Dornerweiterung R1, R2 unterhalb der gestrichelten Linie L' verbleibt; die gestrichelte Linie L' bildet also den hinteren Rand der Dornerweiterung R1, R2. Das Hinterkantenstück 908 des Rotorblatts 1 entfällt beim Rotorblatt 1'.

Insofern ist die Profiltiefe des Rotorblatts 1' auf einen Bereich unterhalb der gestrichelten Linie L' beschränkt. Insofern ist das Rotorblatt 1' mit deutlich geringerer Profiltiefe (Sehnenlänge) ausgebildet bei, wie sich zeigt, dennoch beachtlichen und vorteilhaften Auftriebs- und Gleitwerten. Dies führt zu einer ganz erheblichen Reduzierung und damit erheblich verbesserten Transportfähigkeit des Rotorblatts 1'.

Das Rotorblatt 1' ist besonders effizient im Nabenbereich herstellbar I, indem an den Kern als vorgenanntes Dickenprofil mit relativer Dicke von mehr als 50%, insbesondere mehr als 75% --d.h. an der Hinterkante des Kerns mit einer relativen vergleichsweise hohen Hinterkanten-Dicke-- die Dornerweiterung angebracht wird, insbesondere (wie hier in dieser in Fig.12 gezeigten Ausführungsform) lediglich die Dornerweiterung angebracht wird.

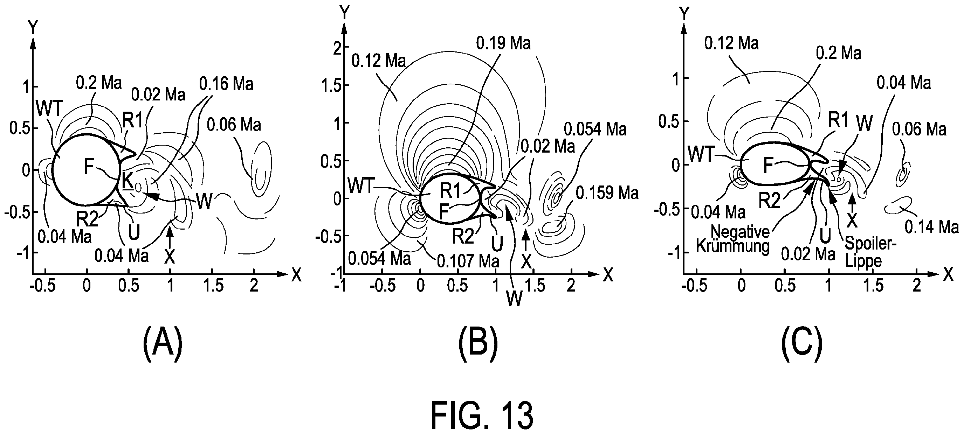

Ein im wesentlichen zylindrisches oder ovales Wickelteils mit einem Dickenprofil einer vorteilhaft relativen Dicke von mehr als 50%, insbesondere mehr als 75% entwickelt sich von einem naben-fernen Nabenbereich I.2 zu einem naben-nahen Bereich I.1, wie dies beispielsweise in Fig.13 deutlich erkennbar ist, bis zu einem zylindrischen Dickenprofil einer vorteilhaft relativen Dicke von bis zu 100% im Anschlussbereich der Nabe.

Für das Rotorblatt 1' als auch für das Rotorblatt 1 ist eine Trennstelle R vorgesehen, an dem das Rotorblatt 1, 1' in Längsrichtung zusammengesetzt ist.

Fig.12 zeigt eine räumliche Darstellung einer bevorzugten Ausführungsform eines Rotorblatts im Nabenbereich (I) mit erkennbarer Dornerweiterung im Nabenbereich, wobei im Nabenbereich in einem ersten naben-nahen Bereich, das Dickenprofil an seiner Hinterkante die Dornerweiterung aufweist und auch in einem zweiten Bereich, nämlich im Nabenbereich in einem zweiten naben-fernen Bereich, das Dickenprofil die Hinterkante eine flache Hinterkante die Dornerweiterung aufweist.

Das Rotorblatt 1' ist für seinen Nabenbereich I mit einer wulstartig verbreiterten Trennstelle R in Fig.12 perspektivisch dargestellt. Die perspektivische Darstellung des Rotorblatts 1' in Fig.12 lässt erkennen, dass das Dickenprofil in Nabenbereich I gebildet ist in Form eines im Wesentlichen elliptischen und sich in Längsrichtung dann zur Nabe hin entwickelnden ovalen und dann zylindrischen Kerns 11', der als ein Wickelteil WT ausgeführt ist, was in Fig.13 entsprechend gekennzeichnet ist.

An der Saugseite S des Kerns 11' ist eine erste Dornerweiterung R1 und an der Druckseite D des Kerns 11' ist eine zweite Dornerweiterung R2 angebracht, nämlich jeweils an dessen Hinterkante F. Dadurch wird eine in Fig.12 erkennbare Kehle K ausgebildet, nämlich an der Hinterkante F zwischen der saugseitigen Dornerweiterung R1 und der druckseitigen Dornerweiterung R2 mit einem durch die Hinterkante F gebildeten, weitgehend flachen, Grund zwischen der ersten und zweiten Dornerweiterung R1, R2.

Fig.13 zeigt im Zusammenhang mit Fig.12 und Fig.11 für die in Fig.11 gezeigten Querschnitte A--A sowie B--B und C--C in den Ansichten (A). (B) und (C) der Fig.13 die entsprechenden Profile mit einer relativen Dicke von mehr als 50% und dann mehr als 75% und schließlich praktisch 100% des Rotorblatts 1' zur Nabe hin - dazu ist eine gerechnete Verteilung von Strömungsgeschwindigkeiten gezeigt. Die Strömungsgeschwindigkeiten sind als Schattierung dargestellt und lassen den Kehlwirbel W in der Kehle K zwischen den Dornerweiterungen R1, R2 am Wickelteil WT erkennen - auf diese wird später Bezug genommen.

Erkennbar ist aus den Profilen der Fig.13 in den Ansichten (A), (B) und (C), dass eine relative und/oder absolute Profildicke 2, die als Verhältnis von Profildicke 2 zu Profiltiefe 3 definiert ist (siehe Fig.6), von einer Rotorblattspitze 5, 7 zu einer Rotorblattwurzel 4 zunimmt; nämlich eine relative Profildicke von zunächst unter 45% auf über 50% zunimmt, dann auf über 75% zunimmt bis zu einer relativen Profildicke von praktisch 100% eines zylindrischen Blattanschlusses an der Rotorblattwurzel 4 bzw. Nabe.

Außerdem ist erkennbar, dass der flache Grund einer Kehle K --also gebildet durch die praktisch flache Hinterkante F des Rotorblatts 1'-- zwischen der ersten und zweiten Dornerweiterung R1, R2 bei einem naben-nahen Profil (wie es in Ansicht (A) der Fig.13 dargestellt ist) nach außen gewölbt ist. Während also im naben-nahen Bereich I.1 der Grund nach außen gewölbt ist, ist dieser in einem mittleren Nabenbereich I (hier in Ansicht (B) der Fig.13 dargestellt) vergleichsweise flach und in einem naben-fernen Bereich I.2 des Nabenbereichs I ist er nach innen gewölbt (wie dies in Ansicht (C) der Fig.13 erkennbar ist).

Weiter ist aus Fig.12 erkennbar, dass die erste und zweite Dornerweiterung R1, R2 an der Hinterkante F bei einem Umfangswinkel unterhalb von 60° angeordnet sind, nämlich hier bei einem in der Fig.12 eingezeichneten Umfangswinkel α1, α2 von etwa 45° angeordnet sind. Der Umfangswinkel α1, α2 der Dornerweiterungen R1, R2 ist hier ausgehend von einer Profilachse (Profilsehne A des Profils des Rotorblatts 1') gemessen.

Der Umfangswinkel a1 an der Saugseite S der ersten Dornerweiterung R1 an der Hinterkante F verläuft nun bei weitgehend festen Umfangswinkel a1 in Richtung des Spitzenbereichs. An der Druckseite D verringert sich der Umfangswinkel a2, wie in Fig.12 erkennbar, für die zweite Dornerweiterung R2 an der Hinterkante F in Richtung des Spitzenbereichs III. Das heißt die Dornerweiterungen R1, R2 laufen aufeinander zu, um am Schnittpunkt T am Ende des Nabenbereich I zusammenzulaufen. Dies entspricht in etwa einer Position, an dem der Umfangswinkel für beide Rosendornprofile R1, R2 bei etwa 0° oder darüber, ggfs. bei festen Umfangswinkel α1, liegt.

Wie in Fig.12 erkennbar ist vorgesehen, dass im Nabenbereich I in einem ersten Bereich, nämlich einem naben-nahen Bereich I.1 im Nabenbereich I, das Dickenprofil an seiner flachen Hinterkante eine vergleichsweise hohe erste relative Dicke und die Dornerweiterung aufweist. Zudem ist vorgesehen, dass im Nabenbereich I in einem zweiten Bereich, insbesondere einem naben-fernen Bereich I.2 im Nabenbereich I, die Hinterkante des Dickenprofils eine spitze Hinterkante ohne Dornerweiterung oder eine flache Hinterkante einer zweiten geringeren relativen Dicke ebenfalls mit der Dornerweiterung aufweist.

Die druckseitige Dornerweiterung R2 geht sozusagen mit dem Twist des Rotorblatts 1' mit; d.h. mit dem abnehmenden Anstellwinkel γ in Richtung des Spitzenbereichs III - dies war bereits aus Fig.6 erkennbar und ist in Fig.12 nochmals deutlich erkennbar. In einem hier nur teilweise dargestellten mittleren Bereich weist das Profil des Rotorblatts bereits eine spitze Hinterkante auf, die sich aus den zusammenlaufenden ersten und zweiten Dornen R1, R2 der Saug- und Druckseite herausbildet. Anders ausgedrückt hat das Rotorblatt 1' eine stumpfe Hinterkante (Fig.3), die sich aus den zusammenlaufenden ersten und zweiten Dornen der Saug- und Druckseite herausbildet, wobei eine relative Hinterkantendicke im Bereich von 5% oder darunter liegt - in einem hier nicht dargestellten Spitzenbereich weist das Profil des Rotorblatts eine spitze Hinterkante auf (Fig.2).

Darüber hinaus ist erkennbar, dass im naben-nahen Bereich I.I des Nabenbereichs I an der Saugseite die erste Dornerweiterung R1 an der Hinterkante F eine relative Dorntiefe aufweist, die geringer ist als eine relative Dorntiefe der zweiten Dornerweiterung R2 an der Hinterkante F an der Druckseite D des Rotorblatts 1'.Des Weiteren ist aus Fig.12 erkennbar, dass im naben-nahen Bereich des Nabenbereichs I an der Druckseite die zweite Dornerweiterung R2 an der Hinterkante eine Ausrichtung aufweist, die stärker zur Druckseite geneigt ist, als eine Ausrichtung der ersten Dornerweiterung R1 an der Hinterkante an der Saugseite S. Dies zeigt sich dadurch, dass der Ausrichtungswinkel β1 für die erste Dornerweiterung R1 größer ist als der Ausrichtungswinkel β2 für die zweite Dornerweiterung R2.

Zudem ist für die zweite Dornerweiterung R2 an der Hinterkante F ein zur Druckseite D hin gewölbter Verlauf einer druckseitigen Unterseite R2u der Dornerweiterung R2 vorgesehen. Das heißt für die druckseitige Unterseite U der zweiten Dornerweiterung R2 ist ein zur Druckseite D gewölbter Verlauf mit zunehmender Krümmung vorgesehen. Der dadurch erreichbare Auftriebseffekt kann zusätzlich noch verstärkt werden durch eine sogenannte gewölbte Lippe; etwa beispielsweise eine Spoiler-Lippe oder eine Guerney-Flap oder dergleichen, wie es in Fig.13 Ansicht (C) erkennbar ist. Dies führt zu einer Verstärkung des Drucks auf der Druckseite D und damit erhöhten Auftriebswerten.

Es zeigt sich, dass diese Ausführungsform wie sie in Fig.12 und Fig.11 als Rotorblatt 1' dargestellt ist Strömungsgeschwindigkeiten im Bereich der Kehle K realisiert, die zwischen 0,01 Ma und 0,1 Ma liegen und damit eine Kehlwirbelausbildung W besonders unterstützen und diese stabilisieren.

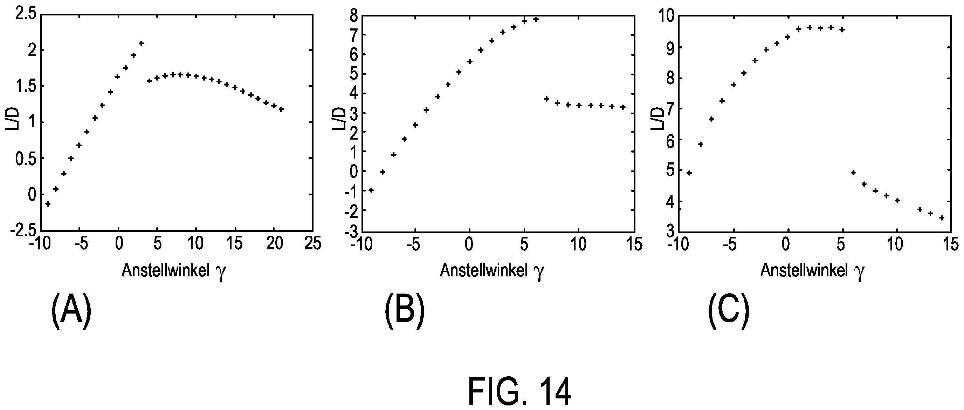

Eine Gleitzahl (Lift/Drag Verhältnis) --wie sie für die Ansichten (A), (B) und (C) in Fig.13 und Fig.14 dargestellt ist (also für die Querschnitte A--A, B--B und C--C der Fig.11) ist noch vergleichsweise hoch, nämlich bei Anstellwinkel γ bis zu 5° für den Schnitt A--A ist liegt diese noch bei Werten von wenigstens bis 2,5, für den Schnitt B--B noch bei Werten von bis 8, und für den Schnitt C--C noch bei Werten von bis sogar 10. Dies sind Gleitzahlen die sich letztendlich realisieren lassen aufgrund der "effektiven" Erhöhung der Profiltiefe aufgrund des stabilisierten Kehlwirbels W wie dies Fig.13 zu entnehmen ist, obwohl die strukturelle Profiltiefe des Rotorblatts 1' deutlich geringer ist.

Anders ausgedrückt ist --wie in Fig.13 erkennbar-- die "effektive" Profiltiefe des Rotorblatts 1' über die eigentliche Hinterkante F hinaus (sozusagen aufgrund des Kehlwirbels) verlängert; insbesondere um wenigstens 20% jedoch bis zu 50% verlängert - beziehungsweise über die Hinterkante der Dornerweiterungen R1, R2 hinaus um bis zu 20% erhöht, wenigstens jedoch bis zu 10% erhöht.

Dieser vorteilhafte Effekt tritt deutlich hervor dadurch, dass ein Strömungsabriss erst hinter dem Wirbel W erkennbar ist während die Strömung sich von einem strukturellen hinteren Rand der Dornerweiterung noch nicht ablöst.

## Patentansprüche

1. Rotorblatt (1) mit einer Saugseite und einer Druckseite für eine Windenergieanlage, aufweisend:
- eine Rotorblattwurzel (4) eines Nabenbereichs (I) zur Anbindung des Rotorblattes (1) an eine Rotornabe, und
- eine zur Rotorblattwurzel (4) abgewandten Seite eines Spitzenbereichs (III) angeordnete Rotorblattspitze (5, 7), wobei
- im Bereich des Nabenbereichs wenigstens teilweise das Rotorblatt ein Dickenprofil aufweist, das an seiner Hinterkante eine Dornerweiterung hat, wobei
- im Bereich des Nabenbereichs die Hinterkante eine flache oder gewölbte Hinterkante ist und wenigstens teilweise das Dickenprofil:
- an der Saugseite eine erste Dornerweiterung an der Hinterkante, und
- an der Druckseite eine zweite Dornerweiterung an der Hinterkante hat,
**dadurch gekennzeichnet, dass**
- im Bereich des Nabenbereichs wenigstens teilweise das Dickenprofil auf der Saug- und/oder Druckseite einen Strömungsstabilisator und/oder einen Vortexgenerator aufweist.

2. Rotorblatt (1) nach Anspruch 1, **dadurch gekennzeichnet, dass**
- im Bereich des Nabenbereichs wenigstens teilweise das Dickenprofil eine relative Dicke von mehr als 40%, insbesondere mehr als 45%, aufweist, und/oder
- im Nabenbereich die flache oder gewölbte Hinterkante eine relative Dicke aufweist, wobei die relative Dicke mehr als 5 % beträgt, und/oder
- eine relative Dorntiefe der Dornerweiterung gemessen von der Hinterkante unterhalb von 25 % liegt und/oder wenigstens oberhalb einer relativen Dicke der Hinterkante, insbesondere oberhalb von 5%, wobei vorteilhaft eine maximale relative Dorntiefe zwischen 15 % und 25 % liegt.

3. Rotorblatt (1) nach Anspruch 1 oder 2, **dadurch gekennzeichnet, dass** im Bereich des Nabenbereichs wenigstens teilweise die Hinterkante eine Serrationsform aufweist, und/oder
- im Bereich des Nabenbereichs wenigstens teilweise das Dickenprofil auf der Saug- und/oder Druckseite den Strömungsstabilisator aufweist ausgewählt aus der Gruppe bestehend aus: Spoiler, Grenzschichtzaun, Grenzschichtabsaugung, und/oder
- im Bereich des Nabenbereichs wenigstens teilweise das Dickenprofil auf der Saug- und/oder Druckseite den Vortexgenerator aufweist ausgewählt aus der Gruppe bestehend aus: Finne, Noppe, Dimpel, Steg, eine Ausblas- oder Absaugstruktur.

4. Rotorblatt (1, 1') nach einem der Ansprüche 1 bis 3, **dadurch gekennzeichnet, dass**
- im Nabenbereich (I) in einem ersten Bereich, nämlich einem naben-nahen Bereich (I.1) im Nabenbereich (I), das Dickenprofil an seiner flachen Hinterkante eine erste relative Dicke und die Dornerweiterung aufweist, und
- im Nabenbereich (I) in einem zweiten Bereich, nämlich einem naben-fernen Bereich (I.2) im Nabenbereich (I), die Hinterkante des Dickenprofils eine spitze Hinterkante ohne Dornerweiterung oder eine flache Hinterkante einer zweiten geringeren relativen Dicke ebenfalls mit der Dornerweiterung aufweist, oder
- im Nabenbereich (I) in einem ersten Bereich, nämlich einem naben-nahen Bereich (I.1) im Nabenbereich (I), das Dickenprofil an seiner flachen Hinterkante die Dornerweiterung aufweist und
- im Nabenbereich (I) in einem zweiten Bereich, nämlich einem naben-fernen Bereich (I.2) im Nabenbereich (I), die Hinterkante des Dickenprofils eine flache Hinterkante ohne die Dornerweiterung aufweist.

5. Rotorblatt (1) nach einem der vorstehenden Ansprüche, **dadurch gekennzeichnet, dass**
- im Nabenbereich (I) zwischen einem ersten Bereich, nämlich einem naben-nahen Bereich (I.1) im Nabenbereich (I), und einem zweiten Bereich, nämlich einem naben-fernen Bereich (I.1) im Nabenbereich (I), das Dickenprofil eine maximale Profiltiefe aufweist, und/oder
- das Rotorblatt (1) im mittleren Bereich (II) eine Profiltiefe aufweist, welche 20% bis 30% der Profiltiefe im Nabenbereich (I) entspricht.

6. Rotorblatt (1) nach einem der vorstehenden Ansprüche, **dadurch gekennzeichnet, dass** eine relative Profildicke (2), die als Verhältnis von Profildicke (2) zu Profiltiefe (3) definiert ist, in einem Bereich, nämlich in einem mittleren Bereich (II) zwischen Rotorblattwurzel (4) des Nabenbereichs (I) und Rotorblattspitze (5, 7) des Spitzenbereichs (III) ein lokales Maximum aufweist, insbesondere die relative Profildicke (2) des lokalen Maximums 35% bis 50% beträgt, insbesondere 40% bis 45% beträgt.

7. Rotorblatt (1) nach einem der vorstehenden Ansprüche,
**dadurch gekennzeichnet, dass**
- das Rotorblatt (1) aus einem ersten und einem zweiten Rotorblattabschnitt zusammengesetzt ist, und
- der erste Rotorblattabschnitt die Rotorblattwurzel (4) und der zweite Rotorblattabschnitt die Rotorblattspitze (7) aufweist, und
- der erste und der zweite Rotorblattabschnitt an einer Trennstelle miteinander verbunden sind,
- insbesondere wobei die Trennstelle im mittleren Bereich (II) zwischen Rotorblattwurzel (4) und Rotorblattspitze (7) und/oder im Bereich eines lokalen Maximums einer relativen Profildicke (2) angeordnet ist, die als Verhältnis von Profildicke (2) zu Profiltiefe (3) definiert ist.

8. Rotorblatt (1, 1') nach einem der vorstehenden Ansprüche, **dadurch gekennzeichnet, dass**
- im Bereich des Nabenbereichs wenigstens teilweise das Dickenprofil eine relative Dicke von mehr als 50%, insbesondere mehr als 75%, aufweist, wobei das Dickenprofil gebildet ist in Form eines im wesentlichen zylindrischen oder ovalen Kerns (11'), vorzugsweise eines im wesentlichen zylindrischen oder ovalen Wickelteils (WT), und/oder
- das Dickenprofil an der Saugseite die erste Dornerweiterung an der Hinterkante und an der Druckseite die zweite Dornerweiterung an der Hinterkante aufweist, unter Ausbildung einer Kehle (K) mit praktisch flachem Grund zwischen der ersten und zweiten Dornerweiterung, wobei eine relative und/oder absolute Profildicke (2), die als Verhältnis von Profildicke (2) zu Profiltiefe (3) definiert ist, von einer Rotorblattwurzel (4) zu einer Rotorblattspitze (5, 7) abnimmt.

9. Rotorblatt (1,1') nach Anspruch 8, **dadurch gekennzeichnet, dass** der flache Grund einer Kehle (K) zwischen der ersten und zweiten Dornerweiterung nach außen gewölbt ist im naben-nahen Bereich (I.1) des Nabenbereichs (I) und nach innen gewölbt ist im naben-fernen Bereich (I.2) des Nabenbereichs (I).

10. Rotorblatt (1, 1') nach einem der vorstehenden Ansprüche, **dadurch gekennzeichnet, dass** die erste und zweite Dornerweiterung (R1, R2) an der Hinterkante bei einem Umfangswinkel unterhalb von 60°, insbesondere 45°, angeordnet sind, wobei der Umfangswinkel gemessen ist ausgehend von einer Profilachse ohne Anstellwinkel.

11. Rotorblatt (1, 1') nach einem der vorstehenden Ansprüche, **dadurch gekennzeichnet, dass**
- im Nabenbereich (I), insbesondere im naben-nahen Bereich (I.1) des Nabenbereichs (I), an der Saugseite die erste Dornerweiterung an der Hinterkante eine relative Dorntiefe aufweist, die geringer ist als eine relative Dorntiefe der zweiten Dornerweiterung an der Hinterkante an der Druckseite, und/oder
- im Nabenbereich (I), insbesondere im naben-nahen Bereich (I.1) des Nabenbereichs (I), an der Druckseite die zweite Dornerweiterung an der Hinterkante eine Ausrichtung aufweist, die stärker zur Druckseite geneigt ist als eine Ausrichtung der ersten Dornerweiterung an der Hinterkante an der Saugseite.

12. Rotorblatt (1, 1') nach einem der vorstehenden Ansprüche **dadurch gekennzeichnet, dass** im Nabenbereich (I) an der Saugseite (S) die erste Dornerweiterung (R1) an der Hinterkante bei weitgehend festem Umfangswinkel (α1) in Richtung des Spitzenbereichs (III) verläuft und an der Druckseite (D) die zweite Dornerweiterung (R2) an der Hinterkante bei weitgehend abnehmendem Umfangswinkel (α2) in Richtung des Spitzenbereichs (III) verläuft.

13. Rotorblatt (1, 1') nach einem der vorstehenden Ansprüche **dadurch gekennzeichnet, dass** im Nabenbereich (I) die erste Dornerweiterung (R1) an der Hinterkante und die zweite Dornerweiterung (R2) an der Hinterkante zusammenlaufen, insbesondere bei einer Position (T) eines Umfangswinkel von 0° oder negativen Umfangswinkel oder positiven Umfangswinkel (α1) zusammenlaufen.

14. Rotorblatt (1, 1') nach einem der vorstehenden Ansprüche **dadurch gekennzeichnet, dass** im Nabenbereich (I) an der Druckseite (D) die zweite Dornerweiterung (R2) an der Hinterkante einen zur Druckseite (D) gewölbten Verlauf einer druckseitigen Unterseite hat, insbesondere einen zur Druckseite gewölbten Verlauf einer druckseitigen Unterseite mit zunehmender Krümmung.

15. Rotorblatt (1, 1') nach einem der vorstehenden Ansprüche **dadurch gekennzeichnet, dass** im Nabenbereich (I) an der Druckseite die zweite Dornerweiterung an der Hinterkante eine zur Druckseite gewölbte Lippe aufweist, insbesondere eine Spoiler-Lippe oder Guerney-Flap, insbesondere mit einem aerodynamischen Übergang zu einem zur Druckseite (D) gewölbten Verlauf einer druckseitigen Unterseite (U).

16. Windenergieanlage mit einem Rotor, wobei der Rotor wenigstens ein Rotorblatt (1, 1') nach einem der Ansprüche 1 bis 15 aufweist.

## Claims

1. Rotor blade (1) having an intake side and a pressure side for a wind turbine, having:
- a rotor blade root (4) of a hub region (I) for connecting the rotor blade (1) to a rotor hub, and
- a rotor blade tip (5, 7) which is arranged at the side of a tip region (III) facing away from the rotor blade root (4), wherein,
- in the region of the hub region, the rotor blade at least partially has a thickness profile which has at the rear edge thereof a mandrel expansion, wherein,
- in the region of the hub region, the rear edge is a flat or curved rear edge and the thickness profile at least partially has:
- at the intake side a first mandrel expansion at the rear edge, and
- at the pressure side a second mandrel expansion at the rear edge,
**characterised in that**
- in the region of the hub region, the thickness profile at least partially has a flow stabiliser and/or a vortex generator at the intake side and/or pressure side.

2. Rotor blade (1) according to claim 1, **characterised in that**
- in the region of the hub region, the thickness profile at least partially has a relative thickness of more than 40%, in particular more than 45%, and/or
- in the hub region, the flat or curved rear edge has a relative thickness, the relative thickness being more than 5%, and/or
- a relative mandrel depth of the mandrel expansion measured from the rear edge is below 25% and/or at least above a relative thickness of the rear edge, in particular above 5%, wherein a maximum relative mandrel depth is advantageously between 15% and 25%.

3. Rotor blade (1) according to claim 1 or 2, **characterised in that**, in the region of the hub region, the rear edge at least partially has a serrated form and/or
- in the region of the hub region, the thickness profile at least partially has at the intake and/or pressure side the flow stabiliser selected from the group comprising: spoiler, boundary layer fence, boundary layer suction, and/or
- in the region of the hub region, the thickness profile at least partially has at the intake and/or pressure side the vortex generator selected from the group comprising: fin, stud, dimple, web, an exhaust or extraction structure.

4. Rotor blade (1, 1') according to any one of claims 1 to 3, **characterised in that**
- in the hub region (I) in a first region, that is to say, a region (I.1) close to the hub in the hub region (I), the thickness profile has at the flat rear edge thereof a first relative thickness and the mandrel expansion, and
- in the hub region (I) in a second region, that is to say, a region (1.2) remote from the hub in the hub region (I), the rear edge of the thickness profile has an acute rear edge without mandrel expansion or a flat rear edge of a second smaller relative thickness also with the mandrel expansion, or
- in the hub region (I) in a first region, that is to say, a region (I.1) close to the hub in the hub region (I), the thickness profile has at the flat rear edge thereof the mandrel expansion, and
- in the hub region (I) in a second region, that is to say, a region (1.2) remote from the hub in the hub region (I), the rear edge of the thickness profile has a flat rear edge without the mandrel expansion.

5. Rotor blade (1) according to any one of the preceding claims, **characterised in that**
- in the hub region (I) between a first region, that is to say, a region (I.1) close to the hub in the hub region (I), and a second region, that is to say, a region (I.1) remote from the hub in the hub region (I), the thickness profile has a maximum profile depth, and/or
- the rotor blade (1) in the central region (II) has a profile depth which corresponds to from 20% to 30% of the profile depth in the hub region (I).

6. Rotor blade (1) according to any one of the preceding claims, **characterised in that** a relative profile thickness (2) which is defined as a ratio of the profile thickness (2) to the profile depth (3), in a region, that is to say, in a central region (II) between the rotor blade root (4) of the hub region (I) and rotor blade tip (5, 7) of the tip region (III), has a local maximum, in particular the relative profile thickness (2) of the local maximum is from 35% to 50%, in particular is from 40% to 45%.

7. Rotor blade (1) according to any one of the preceding claims, **characterised in that**
- the rotor blade (1) is composed of a first and a second rotor blade portion, and
- the first rotor blade portion has the rotor blade root (4) and the second rotor blade portion has the rotor blade tip (7), and
- the first and the second rotor blade portions are connected to each other at a separation location,
- in particular wherein the separation location is arranged in a central region (II) between the rotor blade root (4) and rotor blade tip (7) and/or in the region of a local maximum of a relative profile thickness (2) which is defined as the ratio of profile thickness (2) to profile depth (3).

8. Rotor blade (1, 1') according to any one of the preceding claims, **characterised in that**,
- in the region of the hub region, the thickness profile at least partially has a relative thickness of more than 50%, in particular more than 75%, wherein the thickness profile is in the form of a substantially cylindrical or oval core (11'), preferably a substantially cylindrical or oval winding portion (WT), and/or
- the thickness profile at the intake side has the first mandrel expansion at the rear edge and at the pressure side has the second mandrel expansion at the rear edge, forming a valley (K) with a practically flat base between the first and second mandrel expansion, wherein a relative and/or absolute profile thickness (2) which is defined as the ratio of the profile thickness (2) to profile depth (3) decreases from a rotor blade root (4) to a rotor blade tip (5, 7).

9. Rotor blade (1, 1') according to claim 8, **characterised in that** the flat base of a valley (K) between the first and second mandrel expansion is curved outwards in the region (I.1) of the hub region (I) close to the hub and is curved inwards in the region (1.2) of the hub region (I) remote from the hub.

10. Rotor blade (1, 1') according to any one of the preceding claims, **characterised in that** the first and the second mandrel expansions (R1, R2) are arranged at the rear edge with a peripheral angle below 60°, in particular 45°, wherein the peripheral angle is measured starting from a profile axis without an angle of attack.

11. Rotor blade (1, 1') according to any one of the preceding claims, **characterised in that**
- in the hub region (I), in particular in the region (I.1) of the hub region (I) close to the hub, at the pressure side the first mandrel expansion at the rear edge has a relative mandrel depth which is smaller than a relative mandrel depth of the second mandrel expansion at the rear edge at the pressure side, and/or
- in the hub region (I), in particular in the region (I.1) of the hub region (I) close to the hub, at the pressure side the second mandrel expansion at the rear edge has an orientation which is more powerfully inclined towards the pressure side than an orientation of the first mandrel expansion at the rear edge at the intake side.

12. Rotor blade (1, 1') according to any one of the preceding claims, **characterised in that** in the hub region (I) at the intake side (S) the first mandrel expansion (R1) extends at the rear edge with a substantially fixed peripheral angle (α1) in the direction of the tip region (III) and at the pressure side (D) the second mandrel expansion (R2) extends at the rear edge with a substantially decreasing peripheral angle (α2) in the direction of the tip region (III).

13. Rotor blade (1, 1') according to any one of the preceding claims, **characterised in that** the first mandrel expansion (R1) at the rear edge and the second mandrel expansion (R2) at the rear edge merge in the hub region (I), in particular merge in a position (T) of a peripheral angle of 0° or negative peripheral angle or positive peripheral angle (α1).

14. Rotor blade (1, 1') according to any one of the preceding claims, **characterised in that** in the hub region (I) at the pressure side (D) the second mandrel expansion (R2) has at the rear edge a path of a pressure-side lower side which is curved in the direction towards the pressure side (D), in particular a path of a pressure-side lower side with increasing curvature which is curved in the direction towards the pressure side.

15. Rotor blade (1, 1') according to any one of the preceding claims, **characterised in that** in the hub region (I) at the pressure side the second mandrel expansion has at the rear edge a lip which is curved towards the pressure side, in particular a spoiler lip or Gurney flap, in particular with an aerodynamic transition to a path of a pressure-side lower side (U) which is curved in the direction towards the pressure side (D).

16. Wind turbine having a rotor, wherein the rotor has at least one rotor blade (1, 1') according to any one of claims 1 to 15.

## Revendications

1. Pale de rotor (1) avec un extrados et un intrados pour une éolienne, présentant :
- un pied de pale de rotor (4) d'une zone de moyeu (I) pour la liaison de la pale de rotor (1) avec un moyeu de rotor, et
- une pointe de pale de rotor (5, 7) agencée sur le côté éloigné du pied de pale de rotor (4) d'une zone de pointe (III), dans laquelle
- dans la zone de la zone de moyeu au moins partiellement la pale de rotor présente un profil d'épaisseur qui a au niveau de son bord de fuite un élargissement d'épine, dans laquelle
- dans la zone de la zone de moyeu le bord de fuite est un bord de fuite plat ou incurvé et au moins partiellement le profil d'épaisseur a :
- au niveau de l'extrados un premier élargissement d'épine au niveau du bord de fuite, et
- au niveau de l'intrados un second élargissement d'épine au niveau du bord de fuite,
**caractérisée en ce que**
- dans la zone de la zone de moyeu au moins partiellement le profil d'épaisseur sur l'extrados et/ou l'intrados présente un stabilisateur d'écoulement et/ou un générateur de tourbillon.

2. Pale de rotor (1) selon la revendication 1, **caractérisée en ce que**
- dans la zone de la zone de moyeu au moins partiellement le profil d'épaisseur présente une épaisseur relative de plus de 40 %, en particulier plus de 45 %, et/ou
- dans la zone de moyeu le bord de fuite plat ou incurvé présente une épaisseur relative, dans laquelle l'épaisseur relative est supérieure à 5 %, et/ou
- une profondeur d'épine relative de l'élargissement d'épine mesurée depuis le bord de fuite se trouve inférieure à 25 % et/ou au moins supérieure à une épaisseur relative du bord de fuite, en particulier supérieure à 5 %, dans laquelle une profondeur d'épine relative maximale est avantageusement comprise entre 15 % et 25 %.

3. Pale de rotor (1) selon la revendication 1 ou 2, **caractérisée en ce que** dans la zone de la zone de moyeu au moins partiellement le bord de fuite présente une forme de dent de scie, et/ou
- dans la zone de la zone de moyeu au moins partiellement le profil d'épaisseur sur l'extrados et/ou l'intrados présente le stabilisateur d'écoulement sélectionné à partir du groupe composé de : l'aileron, la clôture de couche limite, l'aspiration de couche limite, et/ou
- dans la zone de la zone de moyeu au moins partiellement le profil d'épaisseur sur l'extrados et/ou l'intrados présente le générateur de tourbillon sélectionné à partir du groupe composé de : la dérive, le téton, le bossage, la traverse, une structure de soufflage ou d'aspiration.

4. Pale de rotor (1, 1') selon l'une des revendications 1 à 3, **caractérisée en ce que**
- dans la zone de moyeu (I) dans une première zone, à savoir une zone proche du moyeu (I.1) dans la zone de moyeu (I), le profil d'épaisseur au niveau de son bord de fuite plat présente une première épaisseur relative et l'élargissement d'épine, et
- dans la zone de moyeu (I) dans une seconde zone, à savoir une zone éloignée du moyeu (I.2) dans la zone de moyeu (I), le bord de fuite du profil d'épaisseur présente un bord de fuite pointu sans l'élargissement d'épine ou un bord de fuite plat d'une seconde épaisseur relative moindre également avec l'élargissement d'épine, ou
- dans la zone de moyeu (I) dans une première zone, à savoir une zone proche du moyeu (I.1) dans la zone de moyeu (I), le profil d'épaisseur au niveau de son bord de fuite plat présente l'élargissement d'épine et
- dans la zone de moyeu (I) dans une seconde zone, à savoir une zone éloignée du moyeu (I.2) dans la zone de moyeu (I), le bord de fuite du profil d'épaisseur présente un bord de fuite plat sans l'élargissement d'épine.

5. Pale de rotor (1) selon l'une des revendications précédentes, **caractérisée en ce que**
- dans la zone de moyeu (I) entre une première zone, à savoir une zone proche du moyeu (I.1) dans la zone de moyeu (I), et une seconde zone, à savoir une zone éloignée du moyeu (I.1) dans la zone de moyeu (I), le profil d'épaisseur présente une profondeur de profil maximale, et/ou
- la pale de rotor (1) présente dans la zone médiane (II) une profondeur de profil qui correspond à 20 % à 30 % de la profondeur de profil dans la zone de moyeu (I).

6. Pale de rotor (1) selon l'une des revendications précédentes, **caractérisée en ce qu'**une épaisseur de profil (2) relative qui est définie comme rapport de l'épaisseur de profil (2) à la profondeur de profil (3), présente dans une zone, à savoir dans une zone médiane (II) entre le pied de pale de rotor (4) de la zone de moyeu (I) et la pointe de pale de rotor (5, 7) de la zone de pointe (III), un maximum local, en particulier l'épaisseur de profil (2) relative du maximum local est comprise entre 35 % et 50 %, en particulier 40 % et 45 %.

7. Pale de rotor (1) selon l'une des revendications précédentes,
**caractérisée en ce que**
- la pale de rotor (1) est composée d'une première et d'une seconde section de pale de rotor, et
- la première section de pale de rotor présente le pied de pale de rotor (4) et la seconde section de pale de rotor présente la pointe de pale de rotor (7), et
- la première et la seconde section de pale de rotor sont reliées entre elles au niveau d'un point de séparation,
- en particulier dans laquelle le point de séparation est agencé dans la zone médiane (II) entre le pied de pale de rotor (4) et la pointe de pale de rotor (7) et/ou dans la zone d'un maximum local d'une épaisseur de profil (2) relative qui est définie comme rapport de l'épaisseur de profil (2) à la profondeur de profil (3).

8. Pale de rotor (1, 1') selon l'une des revendications précédentes, **caractérisée en ce que**
- dans la zone de la zone de moyeu au moins partiellement le profil d'épaisseur présente une épaisseur relative de plus de 50 %, en particulier de plus de 75 %, dans laquelle le profil d'épaisseur est formé sous la forme d'une âme (11') ovale ou sensiblement cylindrique, de préférence d'une partie d'enroulement (WT) ovale ou sensiblement cylindrique, et/ou
- le profil d'épaisseur présente au niveau de l'extrados le premier élargissement d'épine au niveau du bord de fuite et au niveau de l'intrados le second élargissement d'épine au niveau du bord de fuite, en réalisant une gorge (K) avec un fond pratiquement plat entre le premier et second élargissement d'épine, dans laquelle une épaisseur de profil (2) relative et/ou absolue qui est définie comme rapport de l'épaisseur de profil (2) à la profondeur de profil (3), diminue d'un pied de pale de rotor (4) à une pointe de pale de rotor (5, 7).

9. Pale de rotor (1, 1') selon la revendication 8, **caractérisée en ce que** le fond plat d'une gorge (K) entre le premier et second élargissement d'épine est incurvé vers l'extérieur, dans la zone proche du moyeu (I.1) de la zone de moyeu (I) et est incurvé vers l'intérieur, dans la zone éloignée du moyeu (I.2) de la zone de moyeu (I).

10. Pale de rotor (1, 1') selon l'une des revendications précédentes, **caractérisée en ce que** le premier et second élargissement d'épine (R1, R2) sont agencés au niveau du bord de fuite à un angle périphérique inférieur à 60°, en particulier 45°, dans laquelle l'angle périphérique est mesuré à partir d'un axe de profil sans angle d'attaque.

11. Pale de rotor (1, 1') selon l'une des revendications précédentes, **caractérisée en ce que**
- dans la zone de moyeu (I), en particulier dans la zone proche du moyeu (I.1) de la zone de moyeu (I), au niveau de l'extrados le premier élargissement d'épine présente au niveau du bord de fuite une profondeur d'épine relative qui est inférieure à une profondeur d'épine relative du second élargissement d'épine au niveau du bord de fuite sur l'intrados, et/ou
- dans la zone de moyeu (I), en particulier dans la zone proche du moyeu (I.1) de la zone de moyeu (I), au niveau de l'intrados le second élargissement d'épine présente au niveau du bord de fuite une orientation qui est inclinée plus fortement vers l'intrados qu'une orientation du premier élargissement d'épine au niveau du bord de fuite au niveau de l'extrados.

12. Pale de rotor (1, 1') selon l'une des revendications précédentes, **caractérisée en ce que** dans la zone de moyeu (I) au niveau de l'extrados (S) le premier élargissement d'épine (R1) s'étend au niveau du bord de fuite en cas d'angle périphérique (α1) largement fixe en direction de la zone de pointe (III) et au niveau de l'intrados (D) le second élargissement d'épine (R2) s'étend au niveau du bord de fuite en cas d'angle périphérique (α2) largement décroissant en direction de la zone de pointe (III).

13. Pale de rotor (1, 1') selon l'une des revendications précédentes, **caractérisée en ce que** dans la zone de moyeu (I) le premier élargissement d'épine (R1) au niveau du bord de fuite et le second élargissement d'épine (R2) au niveau du bord de fuite convergent, convergent en particulier pour une position (T) d'un angle périphérique de 0° ou angle périphérique négatif ou angle périphérique positif (α1).

14. Pale de rotor (1, 1') selon l'une des revendications précédentes, **caractérisée en ce que** dans la zone de moyeu (I) au niveau de l'intrados (D) le second élargissement d'épine (R2) a au niveau du bord de fuite une étendue incurvée vers l'intrados (D) d'un côté inférieur côté intrados, en particulier une étendue incurvée vers l'intrados d'un côté inférieur côté intrados avec une courbure croissante.

15. Pale de rotor (1, 1') selon l'une des revendications précédentes, **caractérisée en ce que** dans la zone de moyeu (I) au niveau de l'intrados le second élargissement d'épine présente au niveau du bord de fuite une lèvre incurvée vers l'intrados, en particulier une lèvre d'aileron ou un volet Gurney, en particulier avec un passage aérodynamique à une étendue incurvée vers l'intrados (D) d'un côté inférieur côté intrados (U).

16. Éolienne avec un rotor, dans laquelle le rotor présente au moins une pale de rotor (1, 1') selon l'une des revendications 1 à 15.
